# EUROPEAN PATENT SPECIFICATION

(11) **EP 2 207 633 B1**
(45) Date of publication and mention of the grant of the patent: **18.05.2016**
(21) Application number: 08806458.9
(22) Date of filing: 29.09.2008
(51) Int. Cl.: B09C 1/00, C02F 1/28, C02F 3/28

(54) **A METHOD OF REMEDIATING CONTAMINATED WATER AND APPARATUS FOR THE SAME**
VERFAHREN ZUM ENTSEUCHEN VON VERUNREINIGTEM WASSER UND VORRICHTUNG DAFÜR
PROCÉDÉ DE DÉPOLLUTION D'EAU CONTAMINÉE ET APPAREIL POUR LA MISE EN OEUVRE DE CE PROCÉDÉ

(30) Priority: 27.09.2007 GB 0718989
(43) Date of publication of application: 21.07.2010
(73) Proprietor: University Court Of The University Of Aberdeen, Aberdeen AB24 3FX (GB)
(72) Inventor: KILLHAM, Kenneth, Stuart, Aberdeenshire AB51 7SQ (GB); PATON, Graeme, Iain, Aberdeenshire AB24 3NU (GB); CASSIDY, Leigh, Aberdeenshire AB25 1HL (GB)
(74) Representative: Ablett, Graham Keith
(86) International application number: PCT/GB2008/003308
(87) International publication number: WO 2009/040559

(56) References cited:
- DE-A1- 19 820 320
- JP-A- 52 142 682
- US-A- 5 846 431
- COMMUNICATIONS TEAM, OFFICE OF EXTERNAL AFFAIRS, UNIVERSITY OF ABERDEEN, KING'S COLLEGE, ABERDEEN.: "Whisky DRAM helps clean up contaminated water" INTERNET ARTICLE, [Online] 5 March 2008 (2008-03-05), XP002517006 Retrieved from the Internet: URL:http://www.abdn.ac.uk/mediareleases/re lease.php?id=1251> [retrieved on 2008-02-26]

## Description

The present invention relates to a method of remediating contaminated water, for example groundwater, surface water and waste water, for example groundwater contaminated with chlorinated hydrocarbons, and also to apparatus for the same.

Chlorinated hydrocarbons are common pollutants within water systems. They are known to be resistant to remediation and degradation and are known to be toxic, possibly carcinogenic and mutagenic, to both humans and wildlife. For example, tetrachloroethene/perchloroethene (PCE) and trichloroethene (TCE) are listed by the United States Environmental Protection Agency (USEPA) as being amongst the most commonly detected groundwater contaminants at sites covered by the Comprehensive Environmental Response, Compensation, and Liability Act(CERCLA) (more commonly known as "Superfund" sites).

Known techniques for the assessment, monitoring and remediation of sites with water contaminated with chlorinated aliphatic hydrocarbons (CAH) are acknowledged as problematic, due to the physicochemical properties displayed by CAH. CAH cause the formation of dense non-aqueous phase layers (DNAPL) making site characterisation and remediation difficult. Advances in technology in the art have made determination of the mass and location of source material easier, and recent contaminant visualisation models have enabled further insights into plume behaviour. However, restoration of water systems (for example aquifers) to maximum contaminant levels (MCLs) has largely remained impossible.

Traditional reductive water remediation treatments have included the use of simple electron donor compounds such as lactose, alcohols, milk fat, Hydrogen Release Compound (HRC), or complex electron donors such as molasses, corn syrup, zero valent iron (ZVI), organic mulch, yeast extract, edible oils, and Biogeochemical Reductive Dechlorination (BIRD). However, such treatments are expensive (HRC), require repeated applications (sodium lactate, whey), require complex storage techniques (whey), or have reduced permeability / water flux (ZVI, some mulches).

In this connection, DE 19820320 concerns the remediation of water by using draff.

The present invention seeks to provide a method of remediating contaminated water, for example groundwater, surface water and waste water, which method can be used *in situ* and ex *situ,* and is effective, sustainable and cheap.

Thus, according to the present invention there is provided a method of remediating contaminated water by removing chlorinated hydrocarbons, which method comprises treating the water with draff comprising a solid byproduct of whisky manufacture.

Draff is a solid byproduct of the fermentation of cereals, such as from the fermentation of barley during whisky or beer production. For example, during whisky production the barley is firstly soaked to induce germination of the grain, which is then halted by heating ("malting"), following which the grain is ground and heated in a mash tun with water ("mashing"). After mashing, the liquids (the "wort") are taken for distillation to produce the whisky, whereas the solids (the "draff") are removed as a byproduct, traditionally used as animal feed.

A preferred draff for use in the present invention comprises a solid byproduct of the fermentation process of barley from whisky manufacture, but the term "draff" as used herein encompasses all solid byproducts of the fermentation process of any cereal from whisky manufacture, for example maize, wheat, barley, and rye.

As a byproduct from fermentation processes of cereals, draff is thus cheap and readily available. Draff may be refrigerated, for example for up to four months, without significant inhibition of performance, and may be frozen.

The biological/physical/chemical make-up of draff is a complex mixture of different constituents, the content of which will vary between different cereals and fermentation processes. An example of the content of whisky draff is shown in Table 1:

| Table 1 | |
|---|---|
| Constituent | Amount |
| Total reducing sugars | 13g/l |
| % carbon (w/w) | 19.5 |
| % nitrogen (w/w) | 1.5 |
| Soluble protein | 0.92mg/g |
| B complex vitamins | present |
| Mg (%DM) | 0.2 |
| P (%DM) | 0.5 |
| Fe | 3mg/100g |
| Na (%DM) | trace |
| Se (%DM) | trace |
| Ca (%DM) | 0.4 |
| Oil (%DM) | 7.5 |
| Fibre (%DM) | 17 |
| Crude protein (%DM) | 25 |
| FME (MJ/kg) | 9 |
| ME (MJ/kg) | 11.7 |
| *Lactobaccillus sp* | present |
| Saccharomyces sp | present |

Whilst not being bound by theory, draff is believed to be useful for water remediation through a combination of factors resulting from its chemical, biochemical and physical make-up. Thus, it is thought that draff maintains favourable redox conditions, provides electron donor compounds, a carbon source for the bacterial community, and catalytic compounds, and enforces a positive feedback cycle utilising biotic, abiotic and synergistic pathways. The chemical properties of draff are believed to maintain the reductive environment, malt and yeast provide sugars and trace nutrients and also facilitate the breakdown of cellulose within grain husks, alcohol, oil and protein are believed to act as surfactants altering the interfacial tension at the contaminant-water interface, and draff also provides fermentative organisms.

An embodiment of the method of the present invention comprises water remediation through enhanced natural attenuation. Some water systems display desirable properties which may enhance natural processes leading to enhanced attenuation rates.

Another embodiment of the method of the present invention comprises water remediation through reductive dechlorination of chlorinated hydrocarbons. Reductive dechlorination can proceed via biotic pathways (for example, fermentation or respiration) or abiotic pathways (for example, hydrogenolysis or nucleophilic substitution). A preferred embodiment of the method of the present invention comprises a synergism between biotic and abiotic pathways for reductive dechlorination.

In the method of the present invention, draff may be used to treat water *in-situ,* for example in treatment walls, permeable reactive barriers (PRB), or within a borehole using a borehole deployable delivery system. Alternatively, the draff may be used to treat water *ex-situ,* for example in bioreactors, fluidised bed reactors or sediment tanks. The water may be treated passively, for example by initiating and/or augmenting natural and sustainable decontamination and attenuation mechanisms. For example, draff may be placed into the ground for groundwater to pass through, e.g. by drilling a borehole and dropping a borehole deployable delivery system, such as a canister or chain of linked canisters containing draff, down the borehole. Alternatively, a trench may be dug into which the draff is placed. Water may alternatively be treated actively, for example by capturing or funneling groundwater to be treated into a treatment zone containing the draff. The draff may be used alone or bulked with non-active materials such as sand or woodchips. For example, in a trench or a borehole deployable delivery system the draff may be sandwiched between layers of sand, woodchips or other non-active material.

According to the present invention there is also provided apparatus for use in a method of remediating contaminated water by removing chlorinated hydrocarbons, which method comprises treating the water with draff comprising a solid byproduct of whisky manufacture, the apparatus comprising a container containing the draff and means for allowing water to contact the draff on passing through the container, the container further comprising a mesh, the mesh size being sufficiently small so as to substantially prevent egress of draff from the container whilst allowing groundwater to pass through the mesh and the draff within the container.

The container may comprises an elongate canister, and may be made from a material which is substantially inert and non-corroding in the intended environment of use, such as stainless steel.

The apparatus may comprise a plurality of containers linked together in a chain.

The apparatus may be for use down a borehole, i.e. it may be borehole deployable.

The present invention will now be described in detail with reference to the accompanying drawings, in which:
Figure 1 is a schematic representation of a treatment series of a flow through system for testing the water remediating effects of draff;
Figure 2 is a schematic representation of a flow through system comprising four treatment series as shown in Figure 2;
Figure 3 shows the results of remediation of artificial groundwater contaminated with TCE in a reservoir using draff;
Figure 4 shows the results of remediation of artificial groundwater with TCE injected directly into the treatment series using draff;
Figure 5 shows the results of remediation of artificial groundwater contaminated with six different contaminants in a reservoir using draff; and
Figures 6a and 6b show a borehole deployable delivery system suitable for use in the method of the present invention, and a borehole deployable delivery system in use respectively.

### Example 1

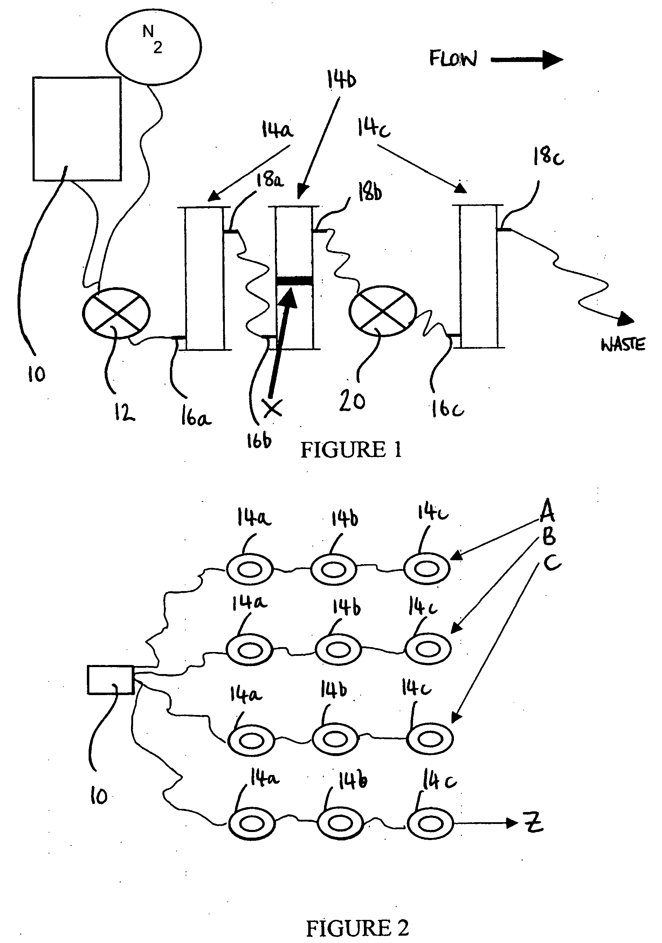

A treatment series for a flow through system was designed as shown schematically in Figure 1. A 20 litre reservoir 10 containing autoclaved distilled water was connected by PTFE tubing to a peristaltic pump 12 linked to three stainless steel columns 14a, 14b and 14c connected in series. The columns 14a, 14b and 14c comprised stainless steel cores having a diameter of 76 mm and a height of 300 mm and a stainless steel lid. Inlet ports 16a, 16b and 16c and outlet ports 18a, 18b and 18c were positioned 20 mm from the top and bottom of each column 14a, 14b and 14c and fitted with fine steel mesh (not shown in Figure 1) to prevent blockage by particles. A further pump 20 was positioned between outlet port 18b and inlet port 16c. Three treatment series (designated as series A, B and C) were run simultaneously in each experiment, together with a control (no treatment, designated as series Z), as shown schematically in Figure 2.

The first and third columns (14a and 14c respectively) in each series A, B, C and Z contained only acid washed sand. The second columns 14b of columns A, B and C contained whisky draff (obtained from Strathisla distillery, Keith, Moray, Scotland) located at a mid column position (arrow X in Figure 1) forming 5 % v/v of the column 14b interior (67.5 g of draff). Column 14b of series Z contained no draff.

The treatment series A, B, C and Z were used to treat artificial groundwater having a TCE concentration of 100 ml/litre, prepared by injecting neat TCE into reservoir 10. The artificial groundwater was pumped through treatment series A, B, C and Z at a rate of 0.74 ml/min for 24 hours to give a 24 hour residence time.

10 ml samples of artificial groundwater were extracted at selected sample points, these being (i) before the water entered the columns 14a, (ii) between the outlets 18a and the inlets 16b, (iii) between the outlets 18b and pump 20, and (iv) after the outlets 18c.

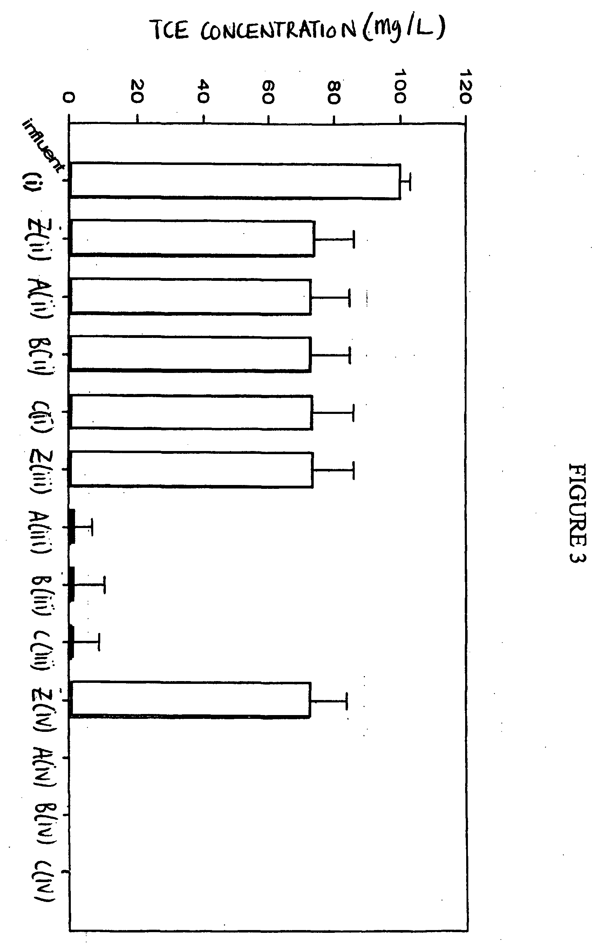

The TCE concentrations of the samples taken are shown in Figure 3. Analysis of the water taken at sample points (i) showed the same chemical composition as the water in the reservoir. Analysis of the water taken at sample points (ii) showed that approximately 20-25 % of the TCE had been sorbed by the columns 14a in each of series A, B, C and Z. Analysis of the water taken at sample points (iii) showed significant (P ≤ 0.05) reductions in TCE concentrations (less than 5 % of initial concentrations) for series A, B and C (i.e. those series in which column 14b contained draff) but series Z showed no further reduction in TCE level compared to the sample taken at sample point (ii). Analysis of the water taken at sample points (iv) showed TCE concentrations below the limits of detection (LOD) for series A, B and C (i.e. those series in which column 14b contained draff) but series Z showed no further reduction in TCE level compared to the sample taken at sample point (ii).

### Example 2

Treatment series A, B, C and Z were set up as described for Example 1 above and shown in Figure 2. An experiment was performed as described in Example 1 but with the reservoir 10 containing no contaminants, only distilled water. Instead, TCE was introduced directly by injection at inlets 16b and sample analysis was conducted only from points (iii) and (iv) described above. Delivery of TCE in this way aimed to represent "source" TCE, for example from direct spillages or storage leaks.

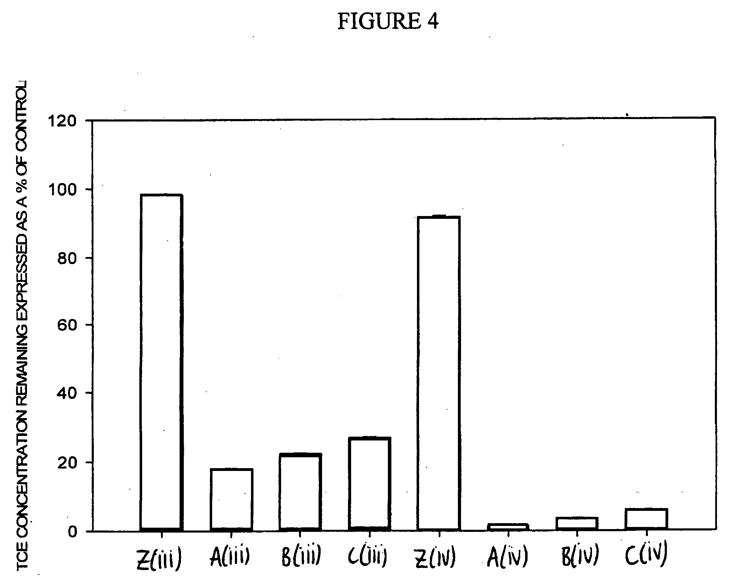

The TCE concentrations of the samples taken are shown in Figure 4. The concentrations designated 100 % are effluents from series Z, i.e. which had no draff treatment and merely passed through three sand filled columns. The final effluent had a TCE concentration of 1460 mg/litre, and the amount of TCE removed by draff treatment in series A, B and C is presented as a percentage of this value.

Figure 4 shows that the average loss of TCE after passing through draff treatment columns 14b of series A, B and C was 78 %, and that the average loss of TCE after passing through columns 14c of series A, B and C was 90 %.

### Example 3

Treatment series A, B, C and Z were set up as described for Example 1 above. An experiment was performed as described in Example 1 but with the reservoir 10 containing six different CAH contaminants, each at a concentration of 100 mg/litre (PCE, TCE, dichloroethene (DCE) carbon tetrachloride (CT), chloroform (CF) and trichloroethane (TCA). Artificial groundwater samples were taken at points (i), (iii) and (iv) as described in Example 1.

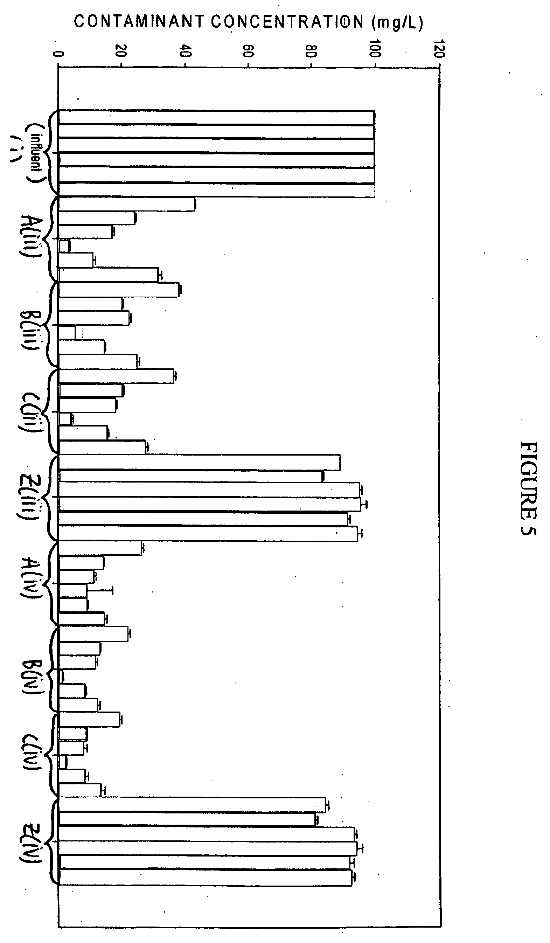

The CAH concentrations of the samples taken are shown in Figure 5 (the results being shown for PCE, TCE, DCE, TCA, CT and CF respectively from left to right for each sample set). The results show that all six contaminants were present in significantly (P ≤ 0.05) decreased concentrations in series A, B and C compared to series Z. The greatest decreases in concentration were with CT and TCA, where decreases of greater than 90 % were recorded at all sample points. TCE concentration decreases were 70 - 80 %, and DCE concentration decreases were greater than 80 %. The contaminants least affected by draff treatment were PCE and CF, but even these contaminants had decreased in concentration at sample point (iv) by 78 % and 82 % respectively.

As is describe above, the present invention provides apparatus for use in a method of remediating contaminated water by removing chlorinated hydrocarbons, which method comprises treating the water with draff comprising a solid byproduct of whisky manufacture, the apparatus comprising a container containing the draff and means for allowing water to contact the draff on passing through the container.

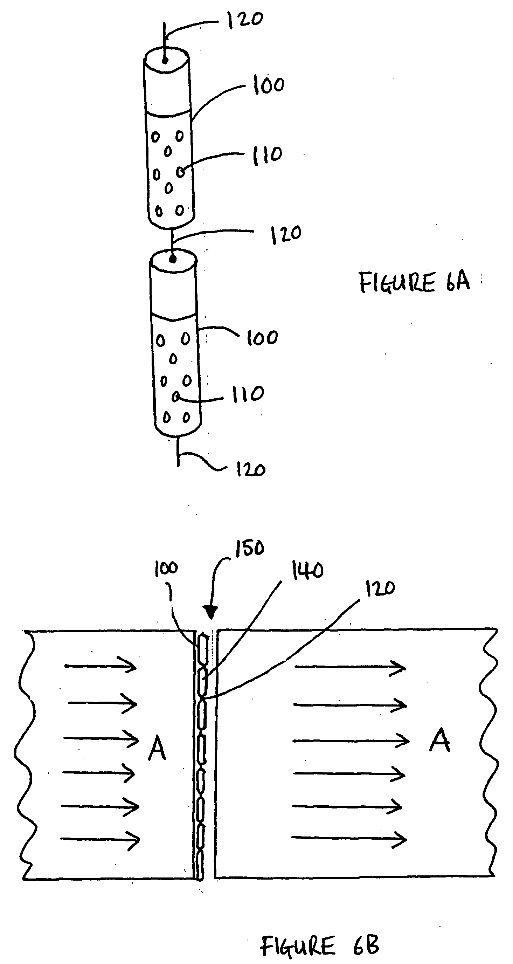

Figures 6a and 6b show a borehole deployable delivery system suitable for use in the method of the present invention, and a borehole deployable delivery system in use respectively.

Referring to Figure 6a, a borehole deployable delivery system suitable for use in the method of the present invention is shown. In the embodiment shown in Figure 6a, the system comprises an elongate canister 100 containing draff. The draff may be used either alone or together with non-active materials, such as sand or woodchips. For example, the draff may be sandwiched between or otherwise embedded within sand or woodchips within the canister 100. The canister 100 is preferably made from a material which is substantially inert and non-corroding in the intended environment of use, such as stainless steel. The canister 100 comprises a mesh 110, the mesh size being sufficiently small so as to substantially prevent egress of draff from the cannister 100 whilst allowing water to pass through the mesh 110 and the draff within the canister 100. The canister 100 may be used alone, or a plurality of canisters 100 may be linked together in a chain by way of a linker 120 at each end of the canister 100. Whilst there is no theoretical limit to the dimensions of the canister 100, for practical purposes a length of from 10 to 20 cm, for example approximately 15 cm, a diameter of from 1 to 5 cm, for example approximately 3 cm, and a mesh size of from 0.25 to 0.75 mm, for example approximately 0.5 mm, are suitable.

The canister 100 is suitable for deployment down a borehole for passive remediation of groundwater. Figure 6b shows a chain 140 of canisters 100 linked together via linkers 120 positioned with a borehole 150. The arrows A indicate the direction of flow of the groundwater.

It will be understood that the illustrated embodiment described herein shows an application of the invention in one form only for the purposes of illustration. In practice the invention may be applied to many different configurations the detailed embodiments being straightforward to those skilled in the art to implement.

## Claims

1. A method of remediating contaminated water by removing chlorinated hydrocarbons, which method comprises treating the water with draff, said draff comprising a solid byproduct of whisky manufacture.

2. A method according to claim 1 wherein the water is also contaminated with one or more of dissolved and free product phase hydrocarbons, metals, BTEX, chromium, uranium, perchlorate, and RDX.

3. A method according to claim 1 or 2 wherein the draff comprises a solid byproduct of the fermentation process of maize, wheat, barley or rye.

4. A method according to any preceding claim wherein the draff comprises a solid waste product of the fermentation process of barley.

5. A method according to any preceding claim which comprises groundwater remediation through enhanced natural attenuation.

6. A method according to any preceding claim wherein the water is groundwater and the method comprises groundwater remediation through reductive dechlorination of the chlorinated hydrocarbons.

7. A method according to claim 6 wherein the reductive dechlorination proceeds via biotic pathways and/or abiotic pathways.

8. A method according to claim 7 wherein the reductive dechlorination proceeds via a combination of biotic and abiotic pathways.

9. A method according to any preceding claim in which the water is groundwater which is treated in *in situ.*

10. A method according to claim 9 wherein the *in situ* treatment comprises the use of a treatment wall, a permeable reactive barrier, or a borehole using a borehole deployable delivery system.

11. A method according to any one of claims 1 to 9 in which the water is groundwater which is treated *ex-situ*.

12. A method according to claim 11 wherein the *ex situ* treatment comprises the use of a bioreactor, a fluidised bed reactor or a sediment tank.

13. A method according to any preceding claim wherein the water is treated passively by initiating and/or augmenting natural decontamination and attenuation mechanisms.

14. A method according to any one of claims 1 to 12 wherein the water is treated actively by capturing and/or funnelling the water into a treatment zone.

15. A method according to any preceding claim wherein the draff is used alone as an active material.

16. A method according to any preceding claim wherein the draff is bulked with non-active materials.

17. Apparatus for use in a method of remediating contaminated water by removing chlorinated hydrocarbons, which method comprises treating the water with draff, said draff comprising a solid byproduct of whisky manufacture, the apparatus comprising a container containing the draff and means for allowing water to contact the draff on passing through the container, and wherein the container further comprises a mesh, the mesh size being sufficiently small so as to substantially prevent egress of draff from the container whilst allowing water to pass through the mesh and the draff within the container.

18. Apparatus according to claim 17 wherein the container comprises an elongate canister.

19. Apparatus according to claims 17 or 18 wherein the container is made from a material which is substantially inert and non-corroding in the intended environment of use.

20. Apparatus according to any one of claims 17 to 19 wherein the container is made from stainless steel.

21. Apparatus according, to any one of claims 17 to 20 which comprises a plurality of containers linked together in a chain.

22. Apparatus according to any one of claims 17 to 21 for deployment down a borehole.

## Patentansprüche

1. Ein Verfahren zur Sanierung von kontaminiertem Wasser durch das Entfernen chlorierter Kohlenwasserstoffe, dieses Verfahren weist die Behandlung des Wassers mit Treber auf, der besagte Treber ist dabei ein festes Nebenprodukt der Whiskey-Herstellung.

2. Ein Verfahren gemäß Anspruch 1, wobei das Wasser auch mit einer oder mehreren gelösten und freien Produktphasen der Kohlenwasserstoffe, Metalle, BTEX, Chrom, Uran, Perchlorat und RDX kontaminiert ist.

3. Ein Verfahren gemäß Anspruch 1 oder 2, wobei der Treber ein festes Nebenprodukt des Gärprozesses von Mais, Weizen, Gerste oder Roggen ist.

4. Ein Verfahren gemäß eines der vorhergehenden Ansprüche, wobei der Treber ein festes Abfallprodukt des Gärprozesses von Gerste ist.

5. Ein Verfahren gemäß eines der vorhergehenden Ansprüche, das Grundwassersanierung durch verbesserte natürliche Verdünnung aufweist.

6. Ein Verfahren gemäß eines der vorhergehenden Ansprüche, wobei das Wasser Grundwasser ist und das Verfahren eine Grundwassersanierung durch reduktive Entchlorung des chlorierten Kohlenwasserstoffs aufweist.

7. Ein Verfahren gemäß Anspruch 6, wobei die reduktive Entchlorung über biotische Pfade und/oder abiotische Pfade verläuft.

8. Ein Verfahren gemäß Anspruch 7, wobei die reduktive Entchlorung über eine Kombination von biotischen und abiotischen Pfaden verläuft.

9. Ein Verfahren gemäß eines der vorhergehenden Ansprüche, in dem das Wasser Grundwasser ist, das *in situ* behandelt wird.

10. Ein. Verfahren gemäß Anspruch 9, wobei die *in situ*-Behandlung die Verwendung einer Behandlungswand; einer durchlässigen reaktiven Wand oder eines Bohrlochs mit einem ins Bohrloch einsetzbaren Zuführsystem, aufweist.

11. Ein Verfahren gemäß eines der vorhergehenden Ansprüche 1 bis 9, in dem das Wasser Grundwasser ist, das ex-situ behandelt wird.

12. Ein Verfahren gemäß Anspruch 11, wobei die *ex-situ*-Behandlung die Nutzung eines Bioreaktors, eines Wirbelschichtreaktors oder eines Ablagerungstanks aufweist.

13. Ein Verfahren gemäß eines der vorhergehenden Ansprüche, wobei das Wasser passiv durch die Einleitung und/oder Verstärkung natürlicher Dekontaminations- und Verdünnungsmechanismen behandelt wird.

14. Ein Verfahren gemäß eines der Ansprüche 1 bis 12, wobei das Wasser aktiv durch Sammeln und/oder Einfüllen in einen Behandlungsbereich durch einen Trichter behandelt wird.

15. Ein Verfahren gemäß eines der vorhergehenden Ansprüche, wobei der Treber allein als aktives Material verwendet wird.

16. Ein Verfahren gemäß eines der vorhergehenden Ansprüche, wobei der Treber mit nicht-aktivem Material aufgeschüttet wird.

17. Eine Vorrichtung zur Verwendung in einem Verfahren zur Sanierung kontaminierten Wassers durch Entfernen der chlorierten Kohlenwasserstoffe, dieses Verfahren weist die Behandlung von Wasser mit Treber auf, besagter Treber ist ein festes Nebenprodukt der Whiskey-Herstellung, die Vorrichtung weist dabei einen Behälter auf, der den Treber und Hilfsmittel enthält, die das Wasser in Kontakt mit dem Treber beim Durchlauf durch den Behälter bringen, und wobei der Behälter darüberhinaus ein Maschennetz hat, die Maschennetzgröße muss dabei ausreichend klein sein, um im Wesentlichen zu verhindern, dass Treber aus dem Behälter austritt, während es das Wasser durch das Maschennetz und den Treber im Behälter laufen lässt.

18. Eine Vorrichtung gemäß Anspruch 17, wobei der Behälter einen länglichen Kanister aufweist.

19. Eine Vorrichtung gemäß Anspruch 17 oder 18, wobei der Behälter aus einem Material hergestellt ist, das im Wesentlichen reaktionsträge und korrosionsbeständig im vorgesehenen Einsatzbereich ist.

20. Eine Vorrichtung gemäß eines der Ansprüche 17 bis 19, wobei der Behälter aus Edelstahl hergestellt ist.

21. Eine Vorrichtung gemäß eines der Ansprüche 17 bis 20, die eine Vielzahl von Behältern aufweist, die in einer Kette miteinander verbunden sind.

22. Eine Vorrichtung gemäß eines der Ansprüche 17 bis 21 für die Einsetzung in ein Bohrloch.

## Revendications

1. Un procédé d'assainissement de l'eau contaminée par le retrait des hydrocarbures chlorés, lequel procédé comporte le traitement de l'eau par des drêches, lesdites drêches comprenant un sous-produit solide de la fabrication du whisky.

2. Un procédé selon la revendication 1 dans lequel l'eau est également contaminée par des hydrocarbures en phase dissoute ou sous forme de produit libre, par des métaux, du BTEX, du chrome, de l'uranium, du perchlorate et du RDX.

3. Un procédé selon la revendication 1 ou 2 où les drêches comprennent un sous-produit solide de la fermentation de maïs, du blé, de l'orge ou dû seigle.

4. Un procédé selon une quelconque revendication précédente dans lequel les drêches comprennent un produit résiduaire solide du processus de fermentation de l'orge.

5. Un procédé selon une quelconque revendication qui comprend l'assainissement des eaux souterraines au moyen de l'amélioration de l'atténuation naturelle.

6. Un procédé selon une quelconque revendication précédente dans lequel l'eau est de l'eau souterraine et le procédé comprend l'assainissement des eaux souterraines au moyen d'une déchloration réductrice des hydrocarbures chlorés.

7. Un procédé selon la revendication 6 dans lequel la déchloration réductrice se produit par l'intermédiaire de voies biotiques et/ou de voies abiotiques.

8. Un procédé selon la revendication 7 dans lequel la déchloration réductrice se produit par l'intermédiaire d'une combinaison de voies biotiques et/ou de voies abiotiques.

9. Un procédé selon une quelconque revendication précédente dans lequel l'eau est de l'eau souterraine qui est traitée *in situ.*

10. Un procédé selon la revendication 9 dans lequel le traitement *in situ* comprend l'utilisation d'un mur de traitement, d'une barrière réactive perméable, ou d'un trou de forage à l'aide d'un système de livraison de forage déployable.

11. Un procédé selon une quelconque des revendications 1 à 9 dans lequel l'eau est de l'eau souterraine qui est traitée ex-situ.

12. Un procédé selon la revendication 11 dans lequel le traitement *ex-situ* comprend l'utilisation d'un bioréacteur, d'un réacteur à lit fluidisé ou d'un réservoir de sédimentation.

13. Un procédé selon une quelconque revendication précédente dans lequel l'eau est traitée de façon passive par le lancement et/ou l'augmentation de mécanismes de décontamination et d'atténuation naturelle.

14. Un procédé selon une quelconque des revendications 1 à 12 dans lequel l'eau est traitée de façon active par la capture et/ou la canalisation de l'eau dans une zone de traitement.

15. Un procédé selon une quelconque revendication précédente dans lequel les drêches sont utilisées seules comme une matière active.

16. Un procédé selon une quelconque revendication précédente dans lequel les drêches sont accumulées avec des matières non actives.

17. Appareil destiné à l'utilisation dans un procédé d'assainissement de l'eau contaminée par retrait des hydrocarbures chlorés, lequel procédé comprend le traitement de l'eau avec par des drêches, lesdites drêches comprenant un sous-produit solide de la fabrication du whisky, l'appareil comprenant un conteneur contenant les drêches et un moyen destiné à permettre à l'eau en contact avec les drêches lors du passage à travers le conteneur et dans lequel le conteneur comprend en outre une maille, la maille étant suffisamment petite afin de prévenir sensiblement les fuites de drêches, le conteneur tout en permettant à l'eau de passer à travers la maille et les drêches à l'intérieur du conteneur.

18. Appareil selon la revendication 17 dans lequel le conteneur comprend une cartouche allongée.

19. Appareil selon les revendications 17 ou 18 dans lequel le conteneur est fabriqué dans un matériau qui est pratiquement inerte et non corrosif dans l'environnement prévu d'utilisation.

20. Appareil selon une quelconque des revendications 17 à 19 dans lequel le conteneur est fabriqué en acier inoxydable.

21. Appareil selon une quelconque des revendications 17 à 20 qui comprend une pluralité de conteneurs reliés ensemble dans une chaîne.

22. Appareil selon une quelconque des revendications 17 à 21 destiné au déploiement dans un trou de forage.
